# EUROPÄISCHE PATENTSCHRIFT

(11) **EP 2 782 744 B1**
(45) Veröffentlichungstag und Bekanntmachung des Hinweises auf die Patenterteilung: **04.01.2017**
(21) Anmeldenummer: 12812832.9
(22) Anmeldetag: 23.11.2012
(51) Int. Cl.: B29C 67/00

(54) **VORRICHTUNG ZUR HERSTELLUNG EINES DREIDIMENSIONALEN GEGENSTANDES MIT EINER DRUCKERZEUGUNGSEINHEIT**
DEVICE FOR PRODUCING A THREE-DIMENSIONAL OBJECT USING A PRESSURE GENERATING UNIT
DISPOSITIF DE PRODUCTION D'UN OBJET TRIDIMENSIONNEL À L'AIDE D'UNE UNITÉ DE GÉNÉRATION DE PRESSION

(30) Priorität: 25.11.2011 DE 102011119340
(43) Veröffentlichungstag der Anmeldung: 01.10.2014
(73) Patentinhaber: Arburg GmbH + Co. KG, 72290 Lossburg (DE)
(72) Erfinder: KRAIBÜHLER, Herbert, 72290 Lossburg (DE); DUFFNER, Eberhard, 72181 Starzach (DE)
(74) Vertreter: Reinhardt, Harry
(86) Internationale Anmeldenummer: PCT/EP2012/004853
(87) Internationale Veröffentlichungsnummer: WO 2013/075836

(56) Entgegenhaltungen:
- EP-A1- 2 266 782
- EP-A2- 0 426 363
- US-A1- 2004 231 594

## Beschreibung

### Gebiet der Erfindung

Die Erfindung betrifft eine Vorrichtung zur Herstellung eines dreidimensionalen Gegenstandes mit einer Druckerzeugungseinheit nach dem Oberbegriff des Anspruches 1.

### Stand der Technik

Aus der dem Oberbegriff des Anspruches 1 zugrundeliegenden DE 10 2009 030 099 A1 ist eine Vorrichtung bekannt, in der eine in der Spritzgießtechnik bekannte Plastifiziereinheit an einen unter Druck setzbaren Materialspeicher für die Erzeugung einer fluiden Phase eines Materials angekoppelt wird. Wie auch aus der EP 1 886 793 A1 bekannt, ist der Materialspeicher Bestandteil einer Austragseinheit zum Austragen aufeinander folgender Tropfen zum werkzeuglosen Aufbau eines dreidimensionalen Gegenstandes auf einem Objektträger. Aufgrund der Adhäsionskräfte des Materials ist dafür ein hoher Druck und sind meist auch hohe Temperaturen erforderlich. Gleichzeitig sollen die so gefertigten Teile für Stückzahl eins und kleine Losgrößen wie zum Beispiel Musterteile präzise aus hochviskosen fluiden Materialien wie aufgeschmolzenen Kunststoffen in kleinsten Mengen in diskreten einzelnen Portionen bis hinunter zu wenigen Mikrogramm hergestellt werden, so dass an die Präzision trotz der Randbedingungen hoher Druck und hohe Temperatur hohe Anforderungen zu stellen sind und zwar insbesondere an die Anordnung von Austragseinheit zu Objektträger. In der DE 10 2009 030 099 A1, Fig. 1 ist die Austragseinheit über die Plastifiziereinheit am Maschinentisch gelagert, an dem auch eine Halterung für den Objektträger befestigt ist. Wärmedehnungen der Plastifiziereinheit haben damit Auswirkung auf die Anordnung von Austragseinheit und Objektträger zueinander.

Dies gilt umso mehr, wenn man bedenkt, dass für die Erzeugung der Tropfen 50 bis 100 MPa (500 bis 1000 bar) anstehend an der Austrittsöffnung der Austragseinheit erforderlich sind. Dies liegt unter anderem an dem sogenannten laminaren Quellfluss, den das Material in der fluiden Phase aufweist. In den Quellfluss geht unter anderem die Anlagerung der Schmelze an der Wandung ein. Dies wird am deutlichsten bei einem Blick in die Erkenntnisse in der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht jedoch eine besondere Strömungssituation, der "Quellfluss", da die Stromlinien in diesem Bereich wie eine Quelle erscheinen, wenn man sie in Bezug auf ein mitbewegtes Koordinatensystem betrachtet.

Der laminare Quellfluss ist für die Erzeugung von auf den herzustellenden Gegenstand ,ausgerichteten' Tropfen auf Grund seiner laminaren Ausbildung einerseits von Vorteil, andererseits bestehen vor allem bei der Ausbildung kleiner Tropfen genau hier die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschtem kleinen Volumen, vorzugsweise im Bereich kleiner gleich 1 mm³ ausbilden lassen, andererseits ist eine entsprechend hohe Viskosität des Materials gerade für die Ausbildung einer geeigneten Tropfenform eines Tropfens von Bedeutung.

Dies unterscheidet die verwendeten Materialien auch von den vorbekannten Wachsen. Aufgrund ihrer Viskosität lassen sich Wachse im normalen Thermodruck- oder Inkjetverfahren ausbringen, also durch reines kinematisches, druckloses Beschleunigen ohne Druckdifferenz des aufgeschmolzenen Tropfens. Die hier verwendeten Materialien unterscheiden sich davon bereits dadurch, dass ihre Viskositätszahl um eine bis mehrere Zehnerpotenzen höher ist. So liegt die dynamische Viskositätszahl des verfestigbaren Materials zwischen 100 und 10000 Pa.s wobei vorzugsweise
das verfestigbare Material ein in der Spritzgießtechnik üblicher Kunststoff oder ein Harz ist. Dies macht die Verarbeitung aus einem unter Druck setzbaren Materialspeicher und damit auch die Verwendung einer gesonderten Druckerzeugungseinheit erforderlich, da Drücke von mehr als 50 bis 100 MPa (500 bis 1000 bar) ohne weiteres erforderlich sind, insbesondere wenn zur Erzielung kleiner Tropfenvolumen kleine Austragsöffnungen eingesetzt werden.

Vorzugsweise liegt das gewünschte Volumen des Tropfens insbesondere im Bereich von 0,01 bis 1 mm³. Der Durchmesser der Austrittsöffnung beträgt vorzugsweise etwa 0,1 mm. Bei einer durchaus üblichen Einspritzgeschwindigkeit von 100 cm/s, die
durch einen sogenannten Punktanguss mit 0,1 mm Durchmesser die Masse fördert,
ergibt sich mit Volumenstrom durch Fläche ein Wert von 10.000 m/s. Dies führt für
die fluide Phase zu einem laminaren Quellfluss mit Fließgeschwindigkeiten bis zu 10.000 m/s.

Vergleichbare Verfahren, die weitläufig unter dem Begriff Prototyping und Rapid Manufacturing bekannt sind und zur Herstellung von Musterteilen mit der Anforderung einer sehr kurzzeitigen Bereitstellung vorgesehen sind, haben diese Problematik nicht. Die Herstellung solcher Teile beruht werkzeuglos, d.h. ohne Formwerkzeuge, und zwar in den meisten Fällen auch auf der Erzeugung der Geometrie aus 3D-Daten, jedoch werden diese Geometrien durch entsprechende Mittel wie Aufschmelzen von Pulverschichten durch Wärmeintrag, z.B. mittels Laser, generative Systeme wie Druckverfahren in unterschiedlicher verbindender Form der Pulverteile oder auch im sogenannten Schmelzstrangverfahren hergestellt. Die Präzision dieser Verfahren wird durch den Druck im System entweder gar nicht oder im Schmelzstrangverfahren in geringem Maße beeinflusst, allerdings findet dort kein diskontinuierliches Herstellen des dreidimensionalen Gegenstandes statt.

Aus der WO 2007/134961 A1 ist es für einen Antrieb einer Spritzgießeinheit an einer Spritzgießmaschine bekannt, den Axialbewegungsmotor unmittelbar an die Förderschnecke anzuschließen und den die Rotation der Förderschnecke bewirkenden Dosiermotor aus Sicht der Plastifiziereinheit hinter dem Axialbewegungsmotor. Für das Zusammenwirken der beiden Motoren sind Raum greifende Vielzahnverbindungen vorgesehen (so auch US 7,270,532 B2, DE 43 44 335 A1, US 2006/0093694 A1, DE 103 18 958 B3).

### Offenbarung der Erfindung

Ausgehend von diesem Stand der Technik liegt der vorliegenden Erfindung die Aufgabe zugrunde, die für die Herstellung des Gegenstandes erforderliche Präzision sicherzustellen.

Diese Aufgabe wird durch eine Vorrichtung mit den Merkmalen des Anspruches 1 gelöst.

Die Vorrichtung weist dazu die Aufbereitungseinheit zur Bereitstellung und ggf. Aufbereitung des verfestigbaren Materials, den unter Druck setzbaren Materialspeicher und die Druckerzeugungseinheit auf, wobei Tropfen über eine Austragseinheit ausgetragen werden. Die Austragseinheit ist feststehend mit einer Lagerung für den Objektträger verbunden, wobei an der Austragseinheit die Druckerzeugungseinheit gegenüber dieser Verbindung beweglich gelagert angeschlossen ist. Es ergibt sich damit eine bauliche Einheit, die sowohl unter den dynamischen Randbedingungen einer Tropfenerzeugung als auch unter den statischen Randbedingungen eines hohen Haltedrucks als auch unter hohen Temperaturen des zu verarbeitenden Materials starr ist, so dass der erforderliche hohe Druck ohne Einfluss auf die herzustellenden Geometrien des herzustellenden Gegenstandes bleibt. Druck und Temperatur können auf Grund der beweglichen Lagerung der Druckerzeugungseinheit die in sich starre Verbindung von Austragseinheit und Objektträgerlagerung nicht beeinflussen, wozu allerdings die voluminöse Druckerzeugungseinheit beweglich zu lagern ist. Es wird also im Gegensatz zur allgemeinen Konstruktionslehre das größere Teil zu Gunsten der Präzision des kleineren teils beweglich gegenüber dem kleineren Teil gelagert.

Austragseinheit und Lagerung des Objektträgers sind stationär auf einem ebenfalls entsprechend steif ausgebildeten Maschinentisch angeordnet. Die Lagerung der Austragseinheit erfolgt über eine bügelartige Abstützung, gegenüber der die Druckerzeugungseinheit beweglich gelagert ist. Damit ist der Anlenkungspunkt der Austragseinheit an dieser Abstützung der Nullpunkt für von der Aufbereitungseinheit herrührende Wärmedehnungen. Damit sind die Lage der Austragseinheit und der Lagerung für den Objektträger von derartigen Wärmedehnungen weitestgehend unbeeinflusst. Eine eventuelle Ausdehnung ist damit bis zum Austrittspunkt an der Austragseinheit kompensiert.

Die Druckerzeugungseinheit, die in der Regel hohe Drücke bei geringer Fördergeschwindigkeit aufzubringen hat, erzeugt durch einen Axialbewegungsmotor und einen Rotationsmotor einerseits konstant den Druck durch Vorwärtsbewegung eines vorzugsweise als Schnecke ausgebildeten Fördermittels und bereitet andererseits den Kunststoff durch Rotation der Schnecke zur Schmelze auf. Dabei können in der Spritzgießtechnik übliche und damit günstige Materialien verwendet werden, da keine besonderen Prototyping-Materialien erforderlich sind.

Vorzugsweise besteht die Druckerzeugungseinheit aus einem Axialbewegungsmotor, der als Hohlwellenmotor mit innenliegender Gewindespindel ausgebildet ist, durch den die Schnecke axial bewegt wird. Die Rotation der Schnecke erfolgt über einen gesonderten Dosiermotor, der im Zusammenwirken mit dem Axialbewegungsmotor und der Regelung des Staudrucks das plastifizierte Material zur Verfügung stellt. Die Schneckenbewegung erfolgt ausschließlich innerhalb des Systems, was eine weitere Voraussetzung für die präzise Tropfenaustragung ist und damit für eine hohe reproduzierbare Bauteilgenauigkeit.

Der den eigentlichen Druck aufbauende Axialbewegungsmotor schließt unmittelbar an die Plastifiziereinheit an. Aus Sicht der Plastifiziereinheit und der Schnecke befindet sich der Dosiermotor hinter dem Axialbewegungsmotor. Dadurch ist das System kompakt aufzubauen, so dass die Einflüsse der hohen Drücke auch im System selbst gering sind.

Der Rotor des Dosiermotors ist mit der Spindel des Einspritzmotors fest verbunden, die wiederum lösbar mit der Schnecke verbunden ist. Diese Spindel steht innerhalb des Axialbewegungsmotors mit dem Rotor des Axialbewegungsmotors in Verbindung. Um die erforderlichen zyklischen Bewegungen der Schnecke und die Rotationsbewegung des Dosiermotors miteinander zu verkoppeln, ist der Dosiermotor in einer Drehrichtung durch einen Freilauf blockierbar.

Weitere Vorteile ergeben sich aus den Unteransprüchen und der nachfolgenden Beschreibung eines Ausführungsbeispiels.

### Kurzbeschreibung der Figuren

Im Folgenden wird die Erfindung anhand eines Ausführungsbeispiels näher erläutert. Es zeigen:
- Fig. 1: eine Vorrichtung zur Herstellung eines dreidimensionalen Gegenstandes in dreidimensionaler Ansicht,
- Fig. 2: einen Längsschnitt durch die Druckerzeugungseinheit,
- Fig. 3: einen Längsschnitt durch Druckerzeugungseinheit und Plastifiziereinheit.

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen eine Vorrichtung zur Herstellung eines dreidimensionalen Gegenstandes 50 aus verfestigbarem Material, das entweder im Ausgangszustand in einer fluiden Phase vorliegt oder verflüssigt werden kann. Die Herstellung des Gegenstandes erfolgt durch sequenzielles Austragen von Tropfen 70. Dazu können z.B. einzelne Tropfen 70 sequenziell aus einer Austrittsöffnung 12b einer Austragseinheit 12 ausgetragen werden, so dass sich Schicht für Schicht der Gegenstand 50 auf einem in den Koordinatenrichtungen des Raumes beweglichen Objektträgers 13 ergibt. Der Objektträger 13 ist an einer Lagerung 40 relativ zur Austrittsöffnung 12b der Austragseinheit beweglich geführten Objektträger 13.

Das verfestigbare Material ist ein plastifiziertes Material, wie z.B. Silikon oder ein plastifizierbares Material, wie Kunststoff oder auch pulverförmige Materialien, wobei es im Wesentlichen darauf ankommt, dass das verfestigbare Material entweder im Ausgangszustand in einer fluiden Phase vorliegt oder verflüssigt werden kann. Das Material kann auch ein unter Wärme reversibel aufschmelzbares und damit recyclebares Material sein. Beliebige andere Materialien können verwendet werden, sofern diese Materialien durch die Vorrichtung plastifizierbar und vor allem durch die wenigstens eine Austragseinheit 12 austragbar sind. Mit der Vorrichtung können vor allem aber auch Materialien verarbeitet werden, wie sie üblicherweise in der Spritzgießtechnik in großen Mengen eingesetzt werden, was zur günstigen Herstellung der damit herzustellenden Gegenstände beiträgt.

Die Vorrichtung weist eine Aufbereitungseinheit zur Aufbereitung des verfestigbaren Materials in die fluide Phase und zu dessen Bereitstellung - insbesondere wenn das Material bereits flüssig vorliegt, aber eventuell noch in diesem Zustand zu halten ist - auf, die im Ausführungsbeispiel durch eine in der Spritzgießtechnik bekannte Plastifiziereinheit 11 gebildet ist. Diese Plastifiziereinheit ist unmittelbar an einen unter Druck setzbaren Materialspeicher 12c in der Austragseinheit 12 gekoppelt. Bedarfsweise ist auch eine mittelbare Kopplung möglich, sofern dafür Sorge getragen wird, dass die in Folge der hohen Drücke möglichen Verformungen in geeigneter Weise beherrscht werden.

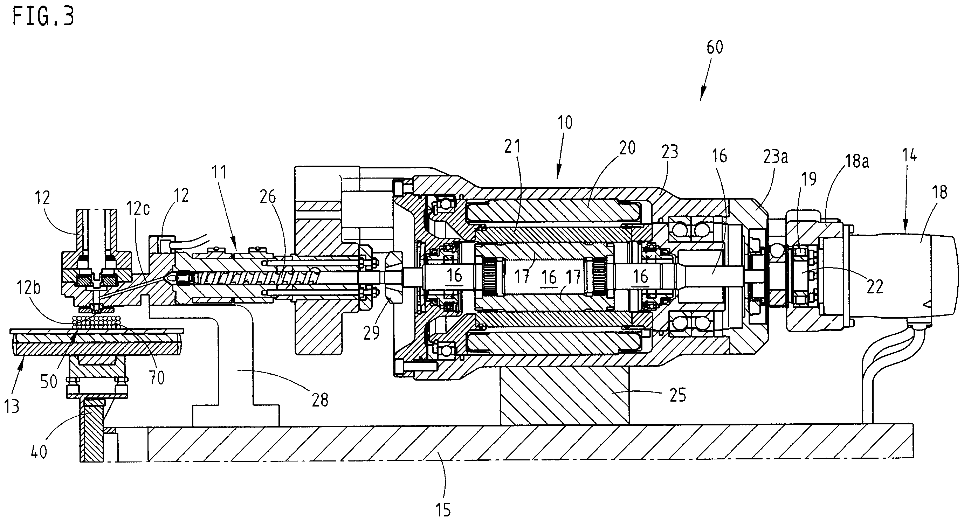

Wenigstens eine Druckerzeugungseinheit 60 erzeugt den für die Ausbildung der Tropfen, besser gesagt Tröpfchen erforderlichen Druck auf die fluide Phase im Materialspeicher 12c, der gemäß Fig. 3 auch nur als Kanal ausgebildet sein kann. Austragseinheit 12 und Lagerung 40 sind feststehend miteinander verbunden. Die Druckerzeugungseinheit 60 ist an der Austragseinheit 12 angeschlossen und gegenüber dieser Verbindung beweglich gelagert. Damit wird die dem Grunde nach größere Einheit, nämlich die Druckerzeugungseinheit 60 beweglich gegenüber der kleineren, entsprechend starr ausgebildeten Einheit aus Austragseinheit 12 und Lagerung 40 für den Objektträger 13 gelagert. So wird trotz hoher Drücke und ggf. hoher Temperaturen eine Präzision im Bereich der Austragung der Tropfen 70 gewährleistet.

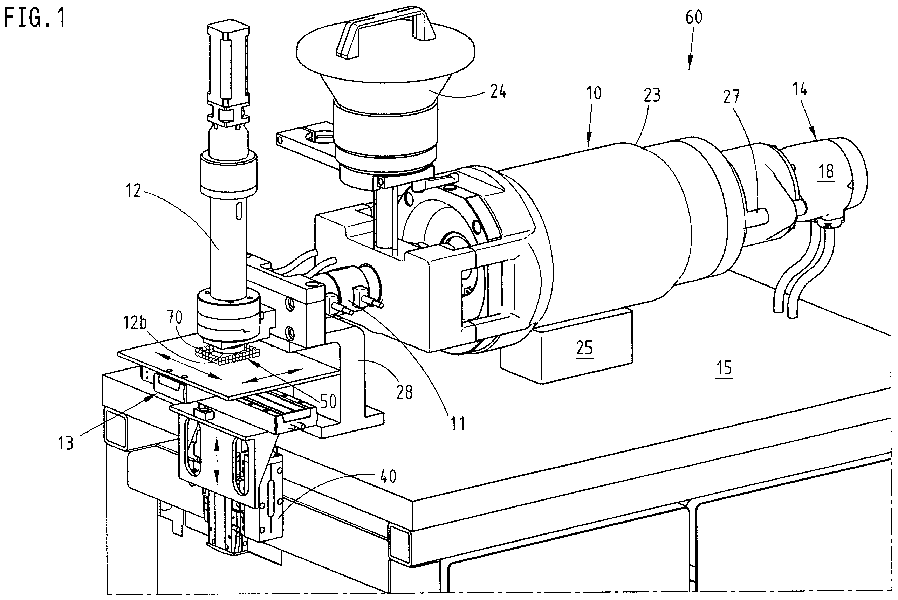

Die Austragseinheit 12 und Lagerung 40 sind stationär auf einem Maschinentisch 15 angeordnet, der vorzugsweise steif ausgebildet ist, um auch an dieser Stelle die Bewegungen so gering wie möglich zu halten. Gemäß Fig. 1 und 3 ist der Axialbewegungsmotor 10 der Druckerzeugungseinheit 60 über die Abstützung 25 auf dem Maschinentisch 15 beweglich, nämlich entlang des Maschinentisches axial beweglich abgestützt, während die Austragseinheit 12 über die Abstützung 28 auf dem Maschinentisch 15 stationär abgestützt ist. Am Maschinentisch 15 ist dann wiederum die Lagerung 40 für den Koordinatentisch des Objektträgers 13 feststehend befestigt, so dass sich über den Maschinentisch 15 eine starre Verbindung zwischen Lagerung 40 und Austragseinheit 12 ergibt. Der "Nullpunkt", von dem aus eine Wärmedehnung der Plastifiziereinheit 11 wirken kann, ist damit durch die Abstützung 28 gebildet, so dass diese Wärmedehnung sich frei in eine Richtung weg vom herzustellenden Gegenstand 50 entfalten kann. Gemäß Fig. 3 ist die Austragseinheit 12 über einen in Richtung auf den Objektträger 13 ragenden vorderen Teil der Abstützung 28 am Maschinentisch 15 abgestützt. Aus Sicht der Austragseinheit 12 befindet sich hinter diesem Anlenkungspunkt die Druckerzeugungseinheit 60. Damit sind die Lage der Austragseinheit 12 und der Lagerung 40 für den Objektträger 13 von derartigen Wärmedehnungen unbeeinflusst. Eine eventuelle Ausdehnung ist damit bis zum Austrittspunkt an der Austragseinheit kompensiert.

Die Druckerzeugungseinheit 60 weist einen Rotationsmotor, den elektromechanischen Dosiermotor 14, und einen Axialbewegungsmotor 10 zur Bewegung eines Fördermittels auf, wobei das Fördermittel vorzugsweise eine in der Plastifiziereinheit 11 aufgenommene Förderschnecke 26 ist. Die Druckerzeugungseinheit 60 bewirkt einerseits eine konstante Druckerzeugung durch Vorwärtsbewegung des Fördermittels bzw. der Förderschnecke 26, andererseits wird im Zusammenwirken zwischen Förderschnecke 26 und Plastifiziereinheit 11 durch Rotation der Förderschnecke in der Plastifiziereinheit der Kunststoff zur Schmelze aufbereitet.

Die Axialbewegung der Förderschnecke 26 wird durch den Axialbewegungsmotor erzeugt, der einen Stator 20 und einen hohlen Rotor 21 zum Antrieb einer den Rotor durchgreifenden Spindel 16 aufweist. Die Spindel 16 des Spindelantriebes steht mit einer Mutter in Wirkverbindung. Die Rotation der Förderschnecke 26 erfolgt durch einen gesonderten Antriebsmotor 18 des Dosiermotors 14, der gleichzeitig mit dem Axialbewegungsmotor und der Regelung des Staudrucks zur Herstellung des Gegenstandes eingesetzt wird. Die Achsen des Dosiermotors 14 und des Axialbewegungsmotors 10 fluchten miteinander.

Die Spindel 16 des Axialbewegungsmotors 10 ist mit einem Rotor 22 des Antriebsmotors 18 des Dosiermotors 14 fest und mit dem Fördermittel bzw. der Förderschnecke 26 lösbar verbunden. Um den Betrieb der beiden Motoren unabhängig voneinander zu gewährleisten ist der Dosiermotor 14 durch einen in einem Gehäuse 18a des Antriebsmotors 18 gelagerten Freilauf 19 in einer Drehrichtung blockierbar. Das Gehäuse 18a des Antriebsmotors 18 ist zum Drehmomentgegenhalt des Freilaufs über eine Drehmomentstütze 27 am Gehäuse 23 bzw. dem Gehäusedeckel 23a des Axialbewegungsmotors 10 gelagert.

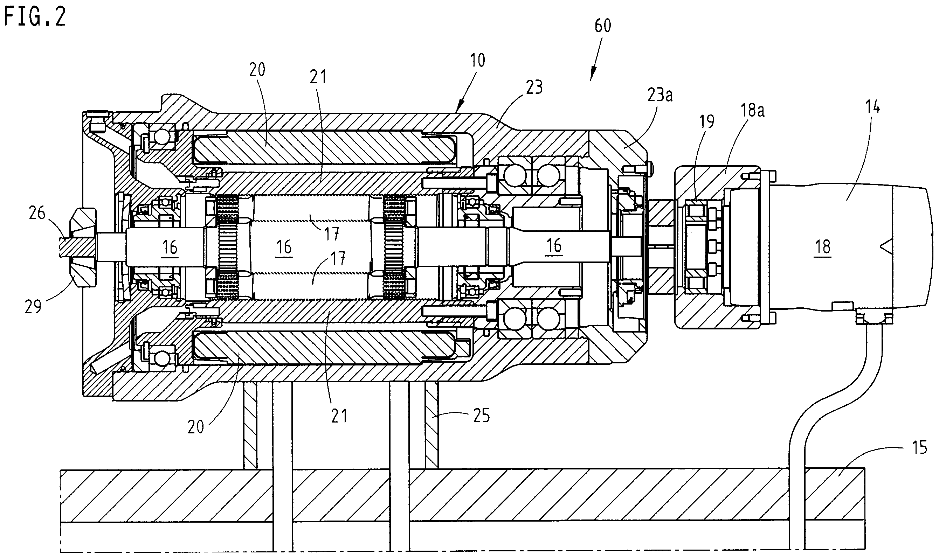

Der Axialbewegungsmotor 10 ist durch einen Hohlwellenmotor gebildet, der von der Spindel 16 durchgriffen ist. Die Mutter des Spindelantriebs des Axialbewegungsmotors 10 ist im Rotor 21 des Axialbewegungsmotors gelagert oder wie im Ausführungsbespiel gemäß Fig. 2 durch den Rotor 21 gebildet. Im Ausführungsbeispiel stehen zudem der Rotor 21 und die Spindel 16 über Planeten 17 miteinander in Wirkverbindung.

Gemäß Fig. 3 ist aus Sicht der Austragseinheit der Dosiermotor 14 hinter dem Axialbewegungsmotor 10 angeordnet. Diese Anordnung wurde gewählt, da durch den Axialbewegungsmotor hohe Kräfte im Bereich von regelmäßig zwischen 50 und 100 MPa aufgebracht werden müssen. Durch die gewählte Anordnung können diese Kräfte auf kürzestem Weg auf die Austragseinheit 12 bzw. den in ihr angeordneten Materialspeicher 12c aufgebracht werden. Gemäß Fig. 3 ist die Förderschnecke 26 am vorderen Ende der Spindel 16, d.h. in Fig. 3 auf der linken Seite des Axialbewegungsmotors über eine Schneckenkupplung 29 lösbar befestigt.

Bei der Druckerzeugung und der Bereitstellung des plastifizierbaren Materials arbeitet die Vorrichtung wie folgt:
Im Ausführungsbeispiel wird die Axialbewegung der Förderschnecke 26 gemäß Fig. 3 durch die Spindel 16 des Axialbewegungsmotors 10 mit rotativ angetriebenen Rotor 21 erzeugt, der zugleich die Mutter des Spindelantriebs bildet. Die Übertragung vom Rotor 21 auf die Spindel 16 erfolgt unter Zwischenschaltung der Planeten 17. Die Spindel kann eine Axialkraft nur erzeugen, wenn sie entsprechend ihrer Spindelübersetzung eine Drehmomentgegenkraft erfährt. Diese Drehmomentgegenkraft wird in der Hauptkraftrichtung, also bei Bewegung der Förderschnecke 26 in Fig. 3 nach links durch den Dosiermotor 14 gebildet. Für die Schneckenrückwärtsbewegung wird die Drehmomentgegenkraft durch entsprechend geregeltes aktives Bestromen zur Verfügung gestellt. Durch die feste Verbindung der Spindel 16 des Axialbewegungsmotors 10 mit dem Rotor 22 des Antriebsmotors 18 des Dosiermotors 14 führt die Drehbewegung des Dosiermotors grundsätzlich auch zu einer Drehbewegung der Spindel 16 und umgekehrt. Die Spindel 16 kann die Drehung in eine Linearbewegung umsetzen, wenn entsprechend ihrer Spindelsteigung eine der gewünschten Vorschubkraft entsprechende Drehmomentabstützung vorgesehen ist. Für diese Drehmomentabstützung ist für den Aufbau des Drucks, d.h. für die Bewegung der Förderschnecke 26 in Fig. 3 nach links ein Freilauf 19 in den Dosiermotor 14 integriert, während für die Rückzugsrichtung der Förderschnecke 26 aktiv mit dem Dosiermotor 14 gearbeitet wird. Um die Bewegung des Axialbewegungsmotors vom Dosiermotor 14 zu entkoppeln, ist der Freilauf vorgesehen, der den Dosiermotor 14 in einer Drehrichtung blockiert bzw. blockieren kann, also ein unidirektionales Drehverhinderungsmittel. Der Freilauf 19 ist am Gehäuse 18a des Antriebsmotors 18 des Dosiermotors 14 gelagert. Diese Lagerung ist ihrerseits wiederum über die Drehmomentstütze 27 am Gehäuse 23 bzw. dem Gehäusedeckel 23a des Axialbewegungsmotors 10 gelagert.

Beim Aufbringen des Drucks durch die Druckerzeugungseinheit 60 als auch aufgrund der je nach Material erforderlichen Temperaturen ergeben sich Bewegungen und Dehnungen der Druckerzeugungseinheit 60. Durch die axial bewegliche Lagerung der Druckerzeugungseinheit 60 und die feststehende Abstützung 28 bzw. Verbindung von Austragseinheit 12 und Lagerung 40 für den Objektträger haben diese Bewegungen jedoch keinen Einfluss auf den im Hinblick auf die Präzision des herzustellenden Gegenstand 50 empfindlichen Bereich zwischen Austragsöffnung 12b und Objektträger 13. Dies wird durch den Aufbau der Druckerzeugungseinheit 60 im Ausführungsbeispiel unterstützt, die dadurch für die Erzeugung hoher Kräfte bei geringen Geschwindigkeiten ausgelegt ist.

### Bezugszeichenliste

- 10: Axialbewegungsmotor
- 11: Plastifiziereinheit
- 12: Austragseinheit
- 12b: Austrittsöffnung
- 12c: Materialspeicher
- 13: Objektträger
- 14: Dosiermotor
- 15: Maschinentisch
- 16: Spindel
- 17: Planeten
- 18: Antriebsmotor
- 18a: Gehäuse
- 19: Freilauf
- 20: Stator von 10
- 21: Rotor von 10
- 22: Rotor von 18
- 23: Gehäuse von 10
- 23a: Gehäusedeckel
- 24: Materialbehälter
- 25: Abstützung für 10
- 26: Förderschnecke
- 27: Drehmomentstütze
- 28: Abstützung für 12
- 29: Schneckenkupplung
- 40: Lagerung
- 50: Gegenstand
- 60: Druckerzeugungseinheit
- 70: Tropfen

## Patentansprüche

1. Vorrichtung zur Herstellung eines dreidimensionalen Gegenstandes (50) aus verfestigbarem Material, das entweder im Ausgangszustand fluid vorliegt oder verflüssigt werden kann, durch sequentielles Austragen von Tropfen (70) mit
- einem Maschinentisch (15),
- wenigstens einer Aufbereitungseinheit mit einer eine in der Spritzgießtechnik bekannten Plastifiziereinheit (11) zur Bereitstellung und Aufbereitung des verfestigbaren Materials in die fluide Phase,
- wenigstens einem Materialspeicher (12c) für die fluide Phase,
- wenigstens einer Druckerzeugungseinheit (60), die Druck auf die fluide Phase im Materialspeicher (12c) erzeugt und einen Rotationsmotor und einen Axialbewegungsmotor (10) zur Bewegung einer in der Plastifiziereinheit (11) aufgenommene Förderschnecke (26) aufweist,
- mindestens einer am Maschinentisch (15) abgestützten Austragseinheit (12) zum Austragen des verfestigbaren Materials durch eine Austrittsöffnung (12b) in Richtung auf den herzustellenden dreidimensionalen Gegenstand (50),
- einem an einer am Maschinentisch (15) feststehend befestigten Lagerung (40) beweglich geführten, relativ zur Austrittsöffnung (12b) beweglichen Objektträger (13) für den herzustellenden dreidimensionalen Gegenstand (50),
- wobei die Plastifiziereinheit (11) unmittelbar an der Austragseinheit (12) angeschlossen und an den unter Druck setzbaren Materialspeicher (12c) angekoppelt ist und zugleich die Druckerzeugungseinheit (60) bildet
**dadurch gekennzeichnet, dass** die Austragseinheit (12) und die Lagerung (40) stationär auf dem Maschinentisch angeordnet sind,
dass die Austragseinheit (12) selbst über eine Abstützung (28) am Maschinentisch (15) abgestützt ist und mit der Lagerung (40) feststehend verbunden ist, dass an der über die Abstützung (28) abgestützten Austragseinheit (12) der Axialbewegungsmotor (10) der Druckerzeugungseinheit (60) gegenüber dieser Verbindung und dem Maschinentisch (15) beweglich gelagert ist,
dass sich aus Sicht der Austragseinheit (12) die beweglich gelagerte Druckerzeugungseinheit (60) hinter der Abstützung (28) befindet, und
dass der aus Sicht der Austragseinheit(12) hinter dem Axialbewegungsmotor (10) angeordnete Rotationsmotor ein elektromechanischer Dosiermotor (14) zum Drehen der Förderschnecke (26) ist.

2. Vorrichtung nach Anspruch 1, **dadurch gekennzeichnet, dass** der elektromechanische Axialbewegungsmotor zur Axialbewegung der Förderschnecke (26) relativ zur Plastifiziereinheit (11) einen Stator (20) und einen hohlen Rotor (21) zum Antrieb einer den Rotor durchgreifenden Spindel (16) eines Spindelantriebs und einer damit zusammenwirkenden Mutter aufweist, wobei die Achsen des Dosiermotors (14) und des Axialbewegungsmotors (10) miteinander fluchten.

3. Vorrichtung nach Anspruch 2, **dadurch gekennzeichnet, dass** die Spindel (16) des Axialbewegungsmotors (10) mit einem Rotor (22) des Antriebsmotors (18) des Dosiermotors (14) fest und mit der Förderschnecke (26) lösbar verbunden ist und dass der Dosiermotor (14) durch einen in einem Gehäuse (18a) des Antriebsmotors (18) gelagerten Freilauf (19) in einer Drehrichtung blockierbar ist.

4. Vorrichtung nach einem der vorhergehenden Ansprüche, **dadurch gekennzeichnet, dass** ein Gehäuse (18a) des Dosiermotors (14) zum Drehmomentgegenhalt des Freilaufs (19) am Gehäuse (23) des Axialbewegungsmotors (10) gelagert ist.

5. Vorrichtung nach einem der vorhergehenden Ansprüche, **dadurch gekennzeichnet, dass** der Axialbewegungsmotor (10) durch einen Hohlwellenmotor gebildet ist, der von einer Spindel (16) durchgriffen ist, wobei eine Mutter des Spindelantriebs des Axialbewegungsmotors (10) im Rotor (21) des Axialbewegungsmotors gelagert oder durch diesen Rotor (21) gebildet ist.

## Claims

1. A device for manufacturing a three-dimensional object (50) made from solidifiable material, which is either fluid in the starting condition, or may be fluidized, by sequential discharge of drops (70), having
- a machine bed (15),
- at least one preparation unit having a plasticising unit (11) that is known from injection moulding technology, for providing and bringing the solidifiable material into the fluid phase,
- at least one material reservoir (12c) for the fluid phase,
- at least one pressure generation unit (60), which generates pressure on the fluid phase in the material reservoir (12c) and has a rotary motor and an axial movement motor (10) for movement of a feedscrew (26) incorporated in the plasticising unit (11),
- at least one discharge unit (12) that is supported on the machine bed (15), for discharging the solidifiable material through an outlet opening (12b) in the direction of the three-dimensional object (50) to be manufactured,
- an object support (13), which is guided movably on a bearing (40) that is fixedly secured to the machine bed (15), and which is movable in relation to the outlet opening (12b), for the three-dimensional object (50) to be manufactured,
- wherein the plasticising unit (11) is directly joined to the discharge unit (12) and coupled to the pressurisable material reservoir (12c) and at the same time forms the pressure generation unit (60),
**characterised in that** the discharge unit (12) and the bearing (40) are arranged to be stationary on the machine bed,
**in that** the discharge unit (12) is itself supported on the machine bed (15) by way of a support (28) and is fixedly connected to the bearing (40),
**in that** the axial movement motor (10) of the pressure generation unit (60) is mounted movably, in relation to this connection and the machine bed (15), on the discharge unit (12) that is supported by way of the support (28),
**in that** from the point of view of the discharge unit (12) the movably mounted pressure generation unit (60) is located behind the support (28), and
**in that** the rotary motor, which from the point of view of the discharge unit (12) is arranged behind the axial movement motor (10), is an electromechanical dispensing motor (14) for rotating the feedscrew (26).

2. A device according to Claim 1, **characterised in that** the electromechanical axial movement motor, for moving the feedscrew (26) axially in relation to the plasticising unit (11), has a stator (20) and a hollow rotor (21) for driving a spindle (16), which passes through the rotor, of a spindle drive and a nut cooperating therewith, wherein the axes of the dispensing motor (14) and the axial movement motor (10) are aligned with one another.

3. A device according to Claim 2, **characterised in that** the spindle (16) of the axial movement motor (10) is fixedly connected to a rotor (22) of the drive motor (18) of the dispensing motor (14) and detachably connected to the feedscrew (26), and **in that** the dispensing motor (14) is lockable in one direction of rotation by a freewheel arrangement (19) that is mounted in a housing (18a) of the drive motor (18).

4. A device according to one of the preceding claims, **characterised in that**, to counter the torque of the freewheel arrangement (19), a housing (18a) of the dispensing motor (14) is mounted on the housing (23) of the axial movement motor (10).

5. A device according to one of the preceding claims, **characterised in that** the axial movement motor (10) is formed by a hollow shaft motor through which a spindle (16) passes, wherein a nut of the spindle drive of the axial movement motor (10) is mounted in the rotor (21) of the axial movement motor or is formed by this rotor (21).

## Revendications

1. Dispositif pour la fabrication d'un objet tridimensionnel (50) à partir d'un matériau durcissable, qui se présente au départ sous forme fluide ou qui peut être fluidifié, par distribution séquentielle de gouttes (70), comportant :
- une table de machine (15),
- au moins une unité de préparation avec une unité de plastification (11) connue dans la technique de moulage par injection, pour la préparation et la mise à disposition du matériau durcissable sous forme fluide,
- au moins un réservoir de matériau (12c) pour la phase fluide,
- au moins une unité de production de pression (60), qui exerce une pression sur la phase fluide dans le réservoir de matériau (12c) et un moteur d'entraînement en rotation et un moteur de déplacement axial (10) pour le déplacement d'une vis sans fin (26) logée dans l'unité de plastification (11),
- au moins une unité de distribution (12) supportée au niveau de la table de machine (15) pour la distribution du matériau durcissable à travers une ouverture de sortie (12b) dans la direction de l'objet tridimensionnel (50) à fabriquer,
- un support d'objet (13) mobile par rapport à l'orifice de sortie (12b), conduit dans son déplacement vers une fixation (40) fixée fermement au niveau de la table de machine (15), pour l'objet tridimensionnel (50) à fabriquer,
- dans lequel l'unité de plastification (11) prolonge directement l'unité de distribution (12) et est couplée au réservoir de matériau (12c) pouvant être mis sous pression et forme en même temps l'unité de production de pression (60),
**caractérisé en ce que** l'unité de distribution (12) et la fixation (40) sont disposées de manière stationnaire sur la table de machine,
**en ce que** l'unité de distribution (12) est elle-même supportée par un support (28) au niveau de la table de machine (15) et est reliée fermement à la fixation (40),
**en ce qu'**au niveau de l'unité de distribution (12) supportée par le support (28), le moteur de déplacement axial (10) de l'unité de production de pression (60) est fixé de manière déplaçable par rapport à cette liaison et à la table de machine (15),
**en ce que** l'unité de production de pression (60) fixée de manière déplaçable se trouve, vue depuis l'unité de distribution (12), derrière le support (28), et
**en ce que** le moteur d'entraînement en rotation disposé derrière le moteur de déplacement axial (10), en regardant depuis l'unité de distribution (12), est un moteur de dosage électromécanique (14) pour l'entraînement en rotation de la vis sans fin (26).

2. Dispositif selon la revendication 1, **caractérisé en ce que** le moteur de déplacement axial électromécanique pour le déplacement axial de la vis sans fin (26) relativement à l'unité de plastification (11) présente un stator (20) et un rotor creux (21) pour l'entraînement d'un arbre (16) d'un entraîneur d'arbre pénétrant dans le rotor et d'un écrou coopérant avec elle, les axes du moteur de dosage (14) et du moteur de déplacement axial (10) étant alignés l'un avec l'autre.

3. Dispositif selon la revendication 2, **caractérisé en ce que** l'arbre (16) du moteur de déplacement axial (10) est relié fixement avec un rotor (22) du moteur d'entraînement (18) du moteur de dosage (14) et de manière amovible avec la vis sans fin (26) et **en ce que** le moteur de dosage (14) est susceptible d'être bloqué dans un sens de rotation par un roulement à billes (19) agencé dans un boîtier (18a) du moteur d'entraînement (18).

4. Dispositif selon l'une des revendications précédentes, **caractérisé en ce qu'**un boîtier (18a) du moteur de dosage (14) est fixé pour le maintien du moment de rotation du roulement à billes (19) au niveau du boîtier (23) du moteur de déplacement axial (10).

5. Dispositif selon l'une des revendications précédentes, **caractérisé en ce que** le moteur de déplacement axial (10) est formé par un moteur à arbre creux, qui est entraîné par un arbre (16), dans lequel un écrou de l'entraîneur d'arbre du moteur de déplacement axial (10) est formé dans le rotor (21) du moteur de déplacement axial ou par ce rotor (21).
